Europäisches Patentamt

European Patent Office

Office européen des brevets

(11) Veröffentlichungsnummer: **0 385 284**
**A1**

(12) **EUROPÄISCHE PATENTANMELDUNG**

(21) Anmeldenummer: **90103493.4**

(22) Anmeldetag: **23.02.90**

(51) Int. Cl.⁵: **C21D 1/673, C21D 9/00, C21D 1/42**

(30) Priorität: **01.03.89 DE 3906425**

(43) Veröffentlichungstag der Anmeldung:
**05.09.90 Patentblatt 90/36**

(84) Benannte Vertragsstaaten:
**AT BE CH DE DK ES FR GB GR IT LI LU NL SE**

(71) Anmelder: **KARL HEESS GMBH & CO. MASCHINENBAU**

**D-6840 Lampertheim 5(DE)**

(72) Erfinder: **Heess, Karl jr.**
**Bensheimer Str. 8**
**6840 Lampertheim(DE)**
Erfinder: **Schweikert, Karl-Heinz**
**Bürgermeister Siegler Str. 15**
**6842 Bürstadt(DE)**

(74) Vertreter: **Ratzel, Gerhard, Dr.**
**Seckenheimer Strasse 36a**
**D-6800 Mannheim 1(DE)**

(54) **Verfahren und Vorrichtung zur verzugsarmen Wärmebehandlung von härtbaren Werkstoffen bei mindestens teilweise Rückführung des Kühlmediums und des Waschmittels zur Wiederverwendung.**

(57) Die Erfindung betrifft ein Verfahren und eine Vorrichtung zur verzugsarmen Wärmebehandlung von härtbaren Werkstoffen bei mindestens teilweise Rückführung des Kühlmediums und des Waschmittels zur Wiederverwendung, bei der das Werkstück (1) in nur zwei Behandlungsstationen an erforderlichen Wärmebehandlungen unterworfen wird und nur bei direkter Abkühlung der ersten Behandlungsstation mindestens einer Zwischenbehandlungsstation (7,9,10) zugeführt wird, wobei in der ersten Behandlungsstation (3) das Werkstück induktiv und berührungslos mittels Induktor erwärmt und in der gleichen Behandlungsstation mittels Kühl- und Preßwerkzeugen (12,13) direkt oder indirekt abgekühlt, verformt und / oder in Form gehalten wird, danach bei indirekter Abkühlung der zweiten Behandlungsstation (4) zugeführt wird und dort zum Zwecke des Anlassens induktiv und Berührungslos mittels eines Induktor erwärmt und in der gleichen Behandlungsstation mittels Kühl- und Preßwerkzeugen direkt und / oder indirekt abgekühlt wird. Bei direkter Abkühlung des Werkstückes in der ersten Behandlungsstation wird das Werkstück mindestens einer Zwischen-behandlungsstation (7,9,10) zugeführt, in der das zur direkten Kühlung verwendete Kühlmedium abgeschleudert, gewaschen und getrocknet wird und danach der zweiten Behandlungsstation (4) zugeführt wird. Durch die Rotation des Werkstücks in der Zwischenbehandlungsstation wird das Härtemittel und das Waschmittel in effizienter Weise vom Werkstück getrennt und kann somit der Wiederverwendung zugeführt werden und erfährt eine höhere Standzeit.

### Verfahren und Vorrichtung zur verzugsarmen Wärmebehandlung von härtbaren Werkstoffen bei mindestens teilweiser Rückführung des Kühlmediums und des Waschmittels zur Wiederverwendung

Die Erfindung betrifft ein Verfahren und eine Vorrichtung zur verzugsarmen Wärmebehandlung von härtbaren Werkstoffen, bei mindestens teilweiser Rückführung des Kühlmediums und des Waschmittels zur Wiederverwendung.

Wärmebehandlungen an Werkstücken zielen darauf, das Gefüge von metallischen Werkstoffen durch Erwärmen und Abkühlen zu verändern und damit bestimmte Eigenschaften des vorliegenden Werkstoffes zu erreichen.

Man unterscheidet hierbei die verschiedensten Wärmebehandlungsverfahren, die auch Härteverfahren genannt werden. Die bekanntesten sind hierbei das Flammhärten, Tauchhärten und das Induktionshärten. Letzteres hat sich immer mehr in der serienmäßigen Härtung durchgesetzt.

Das Härten eines Werkstücks erfolgt allgemein durch Erwärmen auf die werkstoffspezifische Härtetemperatur, durch das Halten auf dieser Härtetemperatur wiederum entsprechend werkstoffspezifischer Voraussetzungen und anschließendes Abschrecken. Nach dem Abschrecken erfolgt meist ein Wiedererwärmen des Werkstückes (Anlassen), das die Härte auf einen bestimmten Wert herabgesetzt und die Spannungen reduziert. Die Anlaßtemperatur ist wiederum abhängig vom vorliegenden Werkstoff und der späteren Anwendung des fertigen Werkzeugs.

Das Abschrecken erfolgt mittels Wasser, Öle oder Luft, die entweder direkt oder indirekt mit dem Werkstück in Verbindung treten.

Gleich welches Verfahren angewendet wird, ergibt sich immer das Problem der Maßgenauigkeit des Werkstückes. Während der Wärmebehandlung unterliegt das Werkstück einem Verzug, der möglichst zu kontrollieren ist. Ein weiteres Problem stellt sich insbesondere beim direkten Kühlen, wobei meist aggressive bzw. toxische Kühlmittel verwendet werden, die als umweltbelastend einzustufen sind.

Beim direkten Kontakt des Härtemediums mit dem Werkstück verbleibt eine gewisse Restmenge des Härtemediums auf der Werkstückoberfläche. Solche Härtemittel müssen aus den verschiedensten Gründen vom Werkstück entfernt werden.

In herkömmlicher Weise werden die Werkstücke nach der Wärmebehandlung einer Waschung unterzogen, wobei sich das Waschmittel mit dem Härtemittel, z. B. Härteöl vermischt und meist nicht mehr voneinander trennbar sind und einer teueren und aufwendigen Entsorgung zugeführt werden müssen.

Es gibt eine Vielzahl von Vorrichtungen, die das eine oder andere Verfahren zur Wärmebehandlung ermöglichen. Jedoch eignen sich diese bekannten Vorrichtungen lediglich zur Durchführung eines Verfahrens, so daß das Werkstück verschiedenen Fertigungsstraßen zugeführt werden muß.

So erfordern z. B. bestimmte Werkstücke verschiedene Erwärmungsverfahren (z. B. Flamm-, Tauch-, Induktionshärten), verschiedene Abkühlverfahren (direkt oder indirekt) oder verschiedene Anlaßverfahren.

Besonders wichtig ist, daß beim Anlassen, bei dem entstandene Spannungen und hohe Sprödigkeit am Werkstück beseitigt wird, die gewünschte und erzielte Härte während des Anlassens an bestimmten Werkstückstellen nicht verlorengeht.

So sind Vorrichtungen bekannt, bei denen das Werkstück gehärtet, anschließend angelassen und partiell wieder gehärtet wird.

Dies hat sich als aufwendig erwiesen und das gewünschte Ergebnis wird oftmals nicht ausreichend erzielt.

Bei der serienmäßigen verzugsarmen Härtung, bei der die Werkstücke taktweise den einzelnen Arbeitsgängen zugeführt werden, verhindern oftmals die gegebenen Taktzeiten eine korrekte zeitabhängige Wärmebehandlung der Werkstücke, da diese von einer Erwärmungsstation eine Abkühlstation zugeführt werden müssen.

Ferner sind Vorrichtungen bekannt, bei denen während des Anlassens, bei dem die während des Härtens entstandenen Spannungen und Sprödigkeit am Werkstück beseitigt werden, die bestimmten Werkstückteilstellen dem Anlassen nicht unterworfen werden soll, diese Werkstückteilstellen von einem gasförmigen Kühlmittel umströmt. Die Präzision der ist mit dieser Weise nicht gewährleistet.

Der Erfindung liegt daher die Aufgabe zugrunde ein Verfahren und eine Vorrichtung zur serienmäßigen, verzugsarmen Wärmebehandlung von härtbaren Werkstoffen bei mindestens teilweiser Rückführung des Kühlmediums und des Waschmittels zur Wiederverwendung zu schaffen, indem das Härtemittel in effizienter Weise vom Werkstück getrennt wird, und dieses getrennte Härtemittel der Wiederverwendung zuzuführen und erst dann das Werkstück einer Waschung zu unterziehen, wobei einerseits das Härtemittel und andererseits das Waschmittel eine höhere Standzeit erhält, womit es ermöglicht wird, in nur einer Station das Erwärmen auf Härtetemperatur und das Abkühlen des Werkstückes unter Verwendung des Induktionsverfahren durchzuführen, wobei die Vorrichtung für direkte oder indirekte Kühlung mit flüssigem Kühlmedium geeignet ist. Das Anlassen erfolgt wiederum durch Induktion und das Abkühlen indirekt oder direkt in einer zweiten Behandlungsstation, wobei optional in dieser zweiten Behandlungsstation wiederum Kühlwerkzeuge integriert sind, die bestimmte Werkstückteilstellen von der geforderten Anlaßtemperatur abschirmen. In beiden Stationen erfolgt die Wärmebehandlung in kombinierten Kühl-und Preßwerkzeugen, um eine verzugsarme Wärmebehandlung zu gewährleisten.

Bei indirekter Kühlung weist dieses Verfahren und die Vorrichtung nur zwei Behandlungsstationen auf, während bei direkter Kühlung, die durch Werkzeugwechsel erfolgt, verschiedene Zwischenbehandlungsstationen für das Abschleudern des Kühlmediums, Waschen und Trocknen vorgesehen sind. Das Wesen der Erfindung besteht u.a. darin, das Werkstück in den jeweiligen Stationen den Behandlungen stets unter Rotation zu unterwerfen. Der Vorrichtung ist ferner mindestens eine Nachbehandlungsstation angefügt, in der z.B. das "künstliche Altern" der Werkstücke erfolgt.

Diese Aufgaben werden gemäß dem Verfahren des Anspruchs 1 gelöst.

Weitere Ausführungsformen sind in den Ansprüchen 2 bis 11 gekennzeichnet.

Ferner werden diese Aufgaben durch eine Vorrichtung gemäß des Anspruch 12 gelöst, wobei besondere Ausführungsmerkmale dieser Vorrichtung in den Ansprüchen 13 bis 33 gekennzeichnet sind, hierbei ist vorgesehen, daß das erfindungsgemäße Verfahren das Werkstück in nur zwei Behandlungsstationen allen erforderlichen Wärmebehandlungen unterworfen wird und bei direkter Abkühlung in der ersten Behandlungsstation mindestens einer Zwischenbehandlungsstation zugeführt wird, wobei in der ersten Behandlungsstation das Werkstück induktiv und berührungslos mittels Induktor erwärmt und in der gleichen Behandlungsstation mittels Kühl- und Preßwerkzeugen direkt oder indirekt abgekühlt, verformt und/oder in Form gehalten wird, danach bei indirekter Abkühlung der zweiten Behandlungsstation zugeführt wird und dort zum Zwecke des Anlassens induktiv und berührungslos mittels eines Induktor erwärmt und in der gleichen Behandlungsstation mittels Kühl- und Preßwerkzeugen direkt und/oder indirekt abgekühlt wird.

Zum Zwecke der Rückgewinnung der zur direkten Abkühlung des Werkstückes in der Behandlungsstation genutzten Kühlmittel wird das Werkstück mindestens einer Zwischenbehandlungsstation zugeführt, in der das zur direkten Kühlung verwendete Kühlmedium abgeschleudert, das Werkstück gewaschen, getrocknet und danach der zweiten Behandlungsstation zugeführt wird.

Die Zuführung des Werkstückes zur Wärmebehandlung kann alternativ in horizontaler oder vertikaler Lage erfolgen, wobei es ein besonderes Merkmal der Erfindung ist, daß das Werkstück unter Rotationsbewegung der Wärmebehandlung unterworfen wird. Ebenso erfolgt die Zuführung zur Zwischenbehandlungsstation, wobei das Werkstück ebenfalls unter Rotation der Zwischenbehandlung unterworfen wird.

Eine zweckmäßige Ausführungsform des Induktors besteht in der Ausbildung als Klaue, die horizontal an das Werkstück in der ersten Behandlungsstation anfährt und dieses berührungslos unter Rotation des Werktücks induktiv erwärmt, wobei die Induktionsklaue im Querschnitt U-förmig ausgebildet ist und hierbei eine zum Zentrum des Werkstücks in Form eines Kreisausschnittes spitz ausläuft, um die Intensität der induktiven Erwärmungsenergie zum Werkstückzentrum zu vermindern.

Die in der zweiten Behandlungsstation angeordnete Induktorklaue fährt vorzugsweise in einem von der Horizontalen abweichenden Winkel an das Werkstück heran und erwärmt dieses berührungslos unter Rotation des Werkstückes induktiv, wobei die Induktionsklaue eine kongruente Ausbildungsform aufweist, wie die Induktionsklaue in der ersten Behandlungsstation.

Alternativ zu den Induktorklauenausführungen sind auch plattenförmige und ringförmige Ausbildungen des Induktors anwendbar.

Vorzugsweise ist in einer besonderen Ausführungsform der Erfindung zwischen der zweiten Behandlungsstation und dem Magazin eine oder mehrere Nachbehandlungsstationen zwischengeschaltet, in denen das Werkstück beispielsweise einer Überdehnung unterzogen wird.

Während der Erwärmung des Werkstückes erfolgt eine ringförmige Kühlung an Werkstücksteilstellen, indem das Werkstück in Kühlwerkzeugen während der induktiven Erwärmung gelagert ist und somit von der Anlaßtemperatur der zu behandelnden Teilstellen abgeschirmt wird.

Die Vorrichtung zur Durchführung des Verfahrens sieht hierbei ein Aufnahme und ein Abgabemagazin für die zu behandelnden Werkstücke vor, zwischen denen eine erste Behandlungsstation zum Erwärmen, Abkühlen und Verformen des zu behandelnden Werkstücks und einer zweiten Behandlungsstation zum Anlassen und Abkühlen des zu behandelnden Werkstücks angeordnet sind, denen wiederum, mindestens eine Zwischenbehandlungsstation sowie eine Nachbehandlungsstation zwischen- bzw. nachgeordnet sind.

Zum Zwecke der verzugsarmen Wärmebehandlung und mindestens teilweiser Rückführung des Kühlmediums und des Waschmittels zur Wiederverwendung ist ferner ein weiteres Merkmal der Erfindung, daß die erste Behandlungsstation eine die Rotation des Werkstücks gewährleistenden, horizontal anfahrbaren Induktor sowie auswechselbare, senkrecht verfahrbare Kühl- und Preßwerkzeuge aufweist und die zweite Behandlungsstation eine die Rotation des Werkstücks gewährleistende in einem vom rechten Winkel zur Werkstückachse abweichenden Winkel anfahrbaren Induktor sowie auswechselbare senkrecht verfahrbare Kühl- und Preßwerkzeuge aufweist.

Zur ringförmigen Kühlung von Werkstückteilstellen sind drehbar gelagerte Kühlwerkzeuge zur Aufnahme des Werkstückes vorgesehen, wobei zur Aufnahme und Abgabe der Werkstücke senkrecht verfahrbare Greifwerkzeuge fungieren.

Die Kühl- und Preßwerkzeuge weisen zum Zwecke der Aufnahme von Zentrierbolzen koaxial zur Werkstücknabe verlaufende Bohrungen auf, wobei der Zentrierbolzen drehbar in der Vorrichtung gelagert ist.

Eine besondere Ausführungsform der Erfindung sieht vor, daß die Kühlwerkzeuge senkrecht verfahrbar sind und auf der zum Werkstück hinweisenden Seite die Formgebung des fertigen Werkstücks aufweist.

Die Segmentkühlwerkzeuge sind mittels Lager drehbar im Kühlwerkzeug angeordnet. Die Kühl- und Preßwerkzeuge weisen zur indirekten Kühlung Kühlkanäle auf, während die Kühlwerkzeuge zum Zwecke der direkten Kühlung Kühlschlitze aufweisen.

Die Zwischenbehandlungsstationen weisen zum Zwecke des Waschens und Trocknens Waschsprühdüsen und Druckluftdüsen auf, wobei in einer besonderen Ausführungsform der Erfindung vorgesehen ist, mehrere Zwischenbehandlungsstationen zu einer Behandlungsstation zu kombinieren, in der die Waschsprühdüsen und die Druckluftdüsen integriert sind.

Die Zentrierbolzen sind hierbei drehbar und senkrecht verfahrbar in der Vorrichtung angeordnet, wie auch die Kühl- und Preßwerkzeuge.

Ein weiteres besonders bevorzugtes Ausführungsbeispiel der Erfindung sieht vor, daß die Zwischenbehandlungsstation aus mindestens einer, das Werkstück aufnehmenden Station besteht, in der das Kühlmedium vom Werkstück getrennt und dieses gewaschen und getrocknet wird, wobei die Zwischenbehandlungsstation einen drehbaren Dorn zur Aufnahme des Werkstücks sowie mindestens einer auf das Werkstück gerichteten Düsenanordnung, aus der Waschmittel und/oder Preßluft austritt, sowie Ab-, Rückführleitungen für das vom Werkstück abgeschleuderte Kühlmedium bzw. Waschmittel vorsieht.

In der Zwischenbehandlungsstation ist zum Zwecke der Rückführung des abgeschleuderten Kühlmediums mindestens eine absperrbare Abführleitung vorgesehen. Zum Zwecke der Rückführung des Waschmittels sieht die Zwischenbehandlungsstation mindestens eine Rückführleitung vor. Ferner sind bei luft- und gasdichtem Abschluß der Zwischenbehandlungsstation eine Abführleitung für die eingeführte Preßluft vorgesehen.

Eine besondere Ausführungsform der Erfindung ist dadurch gekennzeichnet, daß die Düsenanordnung eine Vielzahl von Austrittsöffnungen aufweist, die beidseitig auf das Werkstück gerichtet sind. Hierbei ist es ein besonderes Merkmal der Erfindung, daß die Austrittsöffnungen der Düsen in einem zur Werkstückhorizontalen von 90 abweichenden Winkel auf das Werkstück gerichtet sind.

Anhand den beigefügten Zeichnungen, die ein besonderes Ausführungsbeispiel der Erfindung zeigen, wird diese nun näher erläutert.

Dabei zeigen:

Figur 1 eine Systemdarstellung der Vorrichtung in Frontansicht;

Figur 2 eine Systemdarstellung der erfindungsgemäßen Vorrichtung in der Draufsicht;

Figur 3 eine Systemdarstellung der erfindungsgemäßen Vorrichtung aus der in Figur 1 angedeuteten Richtung A;

Figur 4 eine systematische Darstellung der ersten Behandlungsstation 3;

Figur 5 eine systematische Darstellung der zweiten Behandlungsstation 4;

Figur 6 eine schematische Darstellung der Zwischenbehandlungsstation;

Figur 7 eine weitere Ausführungsform der Zwischenbehandlungsstation.

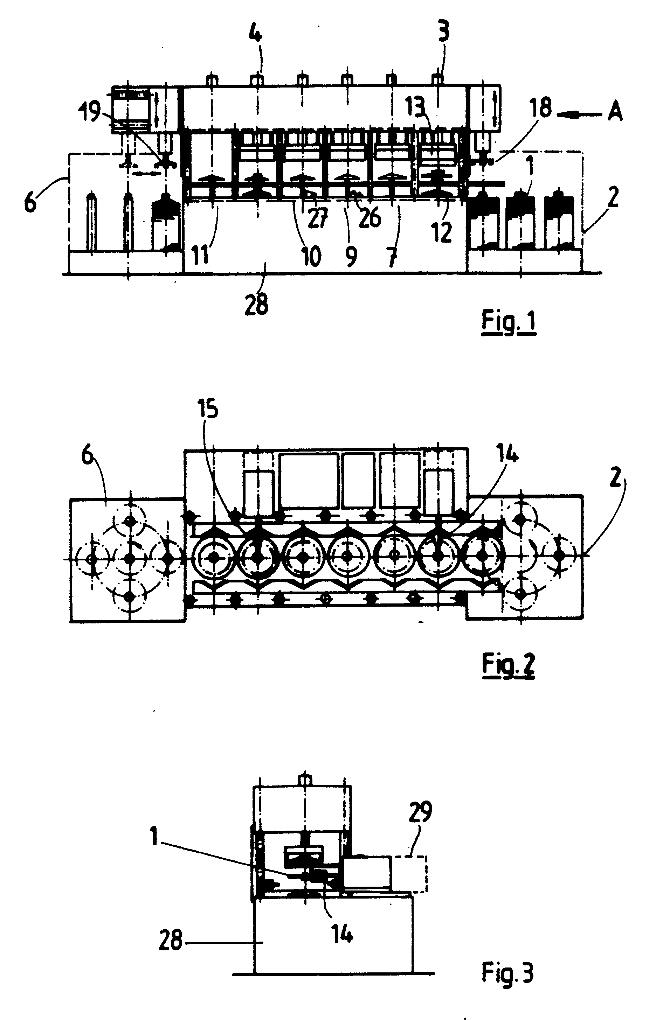

Die Figuren 1 bis 3 zeigen die erfindungsgemäße Vorrichtung aus verschiedenen Ansichten. Die Vorrichtung besteht aus einem Maschinengrundkörper mit einem für alle Stationen durchlaufenden Unterteil 28, auf dem der hier nicht näher beschriebene Transportmechanismus installiert ist. Ausgehend von einem Magazin 2, das als Drehtisch zur Aufnahme von beispielsweise vier Magazinstangen ausgebildet ist, wird mittels eines Greifwerkzeuges 18, vorzugsweise ein Magnetgreifer das Werkstück 1 aufgenommen und dem Transportmechanismus vorgelegt. Die Werkstückaufnahme erfolgt über einen rotierenden Dorn, der gleichzeitig als Zentrierbolzen 20 fungiert. Dieser wird nach oben gefahren um das Werkstück 1 aufzunehmen. Eine Induktorklaue 14 ist auf einem Schlitten 29 horizontal verfahrbar angeordnet. Diese erste Behandlungsstation 3 fungiert als Härtestation. Nachdem das Werkstück 1 auf dem Zentrierbolzen 20 fixiert ist, fährt die Induktorklaue 14 horizontal an das Werkstück 1 an, wobei das Werkstück 1 unter Rotation gehalten wird.

Es erfolgt somit eine gleichmäßige Erwärmung des Werkstücks auf die gewünschte Härtetemperatur. Nachdem die Härtetemperatur erreicht ist, wird die Induktorklaue 14 vom Werkstück 1 entfernt und das Werkstück 1 wird von den Kühl- und Preßwerkzeugen 12, 13 aufgenommen. Dies kann entweder durch Abfahren des Zentrierbolzens 20 mit dem Werkstück 1 in das untere Kühl- und Preßwerkzeug 12 und anschließendes Absenken durch das Kühl- und Preßwerkzeug 13 erfolgen, oder durch Heben und/oder Senken der Kühlund Preßwerkzeuge 12 und 13.

Die Kühl- und Preßwerkzeuge 12, 13 sind auswechselbar in der Vorrichtung angeordnet. Je nach den vorliegenden Erfordernissen können diese als indirekte oder direkte Kühlwerkzeuge ausgebildet sein. Ist es erforderlich das Werkstück direkt zu kühlen, so erfolgt die Strömung des Kühlmittels über Kühlschlitze direkt an das Werktück 1. In dieser ersten Behandlungsstation 3 erfolgt zur gleichen Zeit das Verformen der Teile unter Druck. Hiernach wird das Werkstück 1 der ersten Zwischenbehandlungsstation 7 zugeführt, in der das Kühlmedium unter Rotation des Werkstücks 1 abgeschleudert wird.

Der nächste Schritt ist die Zuführung des Werkstücks 1 zur zweiten Zwischenbehandlungsstation 9, in der das Werkstück 1 gewaschen wird. Hierzu sind Waschsprühdüsen 26 in der Vorrichtung angeordnet. Die nächste Zwischenbehandlungsstation 10 führt das Trocknen des Werkstücks 1 durch, wozu Druckluftdüsen 27 in der Vorrichtung vorgesehen sind.

Die Behandlung der Werkstücke in den Zwischenbehandlungsstationen 7, 9 und 10 erfolgt in diesen Ausführungsbeispielen stets unter Rotation des Werkstücks 1. Im Sinne dieser Erfindung liegt auch, die Zwischenbehandlungsstation 9 (Waschen) und 10 (Trocknen) und gegebenenfalls die Zwischenbehandlungsstation 7 (Abschleudern) zu einer Station zu kombinieren.

Hiernach wird das Werkstück 1 der eigentlichen zweiten Behandlungsstation 4 zugeführt. In dieser Behandlungsstation 4 wird das Werkstück auf eine werkstoffspezifische Temperatur angelassen, was wiederum mit einer Induktorklaue 15 erfolgt. Da jedoch im Gegensatz zur ersten Behandlungsstation 3 das Werkstück bereits in seine Endlage verformt ist, bedarf es, daß die Induktorklaue 15 in einem Winkel zum Werkstück anfahrbar ist. Nachdem die gewünschte Anlaßtemperatur erreicht ist, werden wiederum die Kühl- und Preßwerkzeuge 12, 13 geschlossen. Nun kann wiederum eine direkte oder indirekte Abkühlung vollzogen werden.

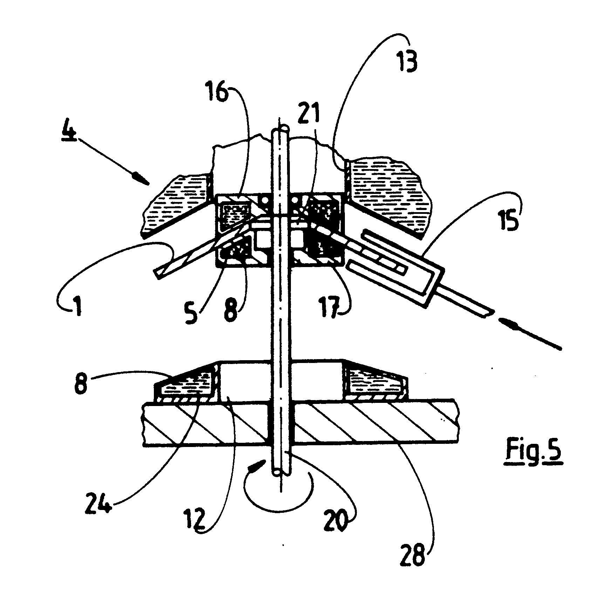

Besonderes Merkmal der Erfindung ist jedoch, daß in dieser zweiten Behandlunsstation 4 bestimmte Werkstückteilstellen von der Anlaßtemperatur abgeschirmt werden können. Dies ist in Figur 5 näher beschrieben.

Wenn in der ersten Behandlungsstation 3 eine indirekte Kühlung vorgenommen wird, so daß das Kühlmedium nicht direkt an das Werkstück 1 strömt, so entfallen die Zwischenbehandlungen in den Stationen 7, 9 und 10.

Vorzugsweise ist der zweiten Behandlungsstation 4 eine oder mehrere Nachbehandlungsstationen 11 zugeordnet. Dies kann z. B. eine Nachbehandlungsstation sein, in der das Werkstück "künstlich gealtert" wird.

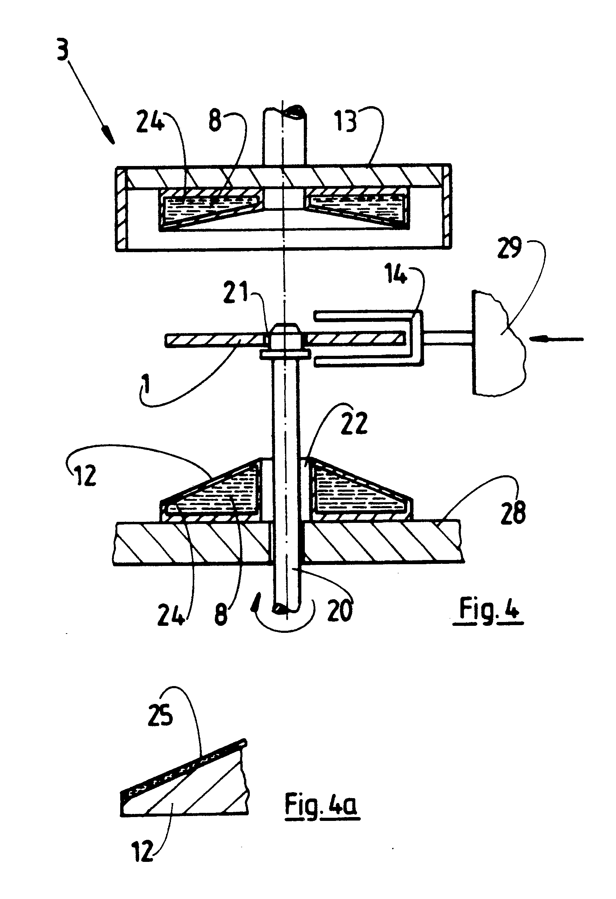

Die Figur 4 zeigt eine schematische Darstellung der ersten Behandlungsstation 3. Der Zentrierbolzen 20 ist senkrecht verfahrbar und rotierbar in der Vorrichtung angeordnet. Nachdem das Werkstück 1 (hier noch als Rohling vorliegend) aufgenommen ist, fährt die Induktionsklaue 14 an das Werkstück 1 heran. Die Induktionsklaue 14 ist U-förmig ausgebildet, so daß diese das Werkstück derart umgibt, daß eine Rotation des Werkstücks 1 gewährleistet ist. Es erfolgt somit eine gleichmäßige und kontrollierte Erwärmung des Werkstücks. Sobald das Werkstück 1 die gewünschte Härtetemperatur erreicht hat, schließen die Kühl- und Preßwerkzeuge 12 und 13 und das erwärmte Werkstück 1 erhält zunächst seine Formgebung, da die Kühl- und Preßwerkzeuge 12, 13 gleichzeitig als Matritzen fungieren. Nachdem sich das Werkstück 1 innerhalb der geschlossenen Kühl- und Preßwerkzeuge 12, 13 befindet, setzt die Kühlung ein. In diesem Fall sind die Kühl- und Preßwerkzeuge zur indirekten Kühlung ausgelegt. Hierzu sind Kühlkanäle 24 innerhalb der Werkzeuge angeordnet. Alternativ, wie dies bereits zuvor beschrieben wurde, ist ein Kühl- und Preßwerkzeug mit Kühlschlitzen 25 (wie dies in Figur 4a angedeutet ist), welches zur direkten Kühlung fungiert, gegen das indirekte Kühlwerkzeug auszuwechseln.

Um die senkrechte Verfahrbarkeit des Zentrierbolzens 20 zu gewährleisten, weist das Kühlwerkzeug 12 eine Durchgangsbohrung 22 auf.

Die Figur 5 zeigt die zweite Behandlungsstation 4. Sie weist den gleichen Aufbau auf, wie die erste Behandlungsstation mit dem Unterschied, daß die Induktionsklaue 15 in einem Winkel an das Werkstück, das nun bereits verformt ist, anfahrbar ist.

Besonderes Merkmal dieser zweiten Behandlungsstation 4 ist, daß hier drehbar mittels Lager 23 angeordnete Kühlwerkzeuge 16, 17 vorgesehen sind. Der Zentrierbolzen 20, der in die Werkstücknarbe 21 einfährt, wird hierbei ebenfalls von den Kühlwerkzeugen 16, 17 aufgenommen. Diese Kühlwerkzeuge 16, 17 weisen in diesem Ausführungsbeispiel ebenfalls zur indirekten Kühlung vorgesehene Kühlkanäle 5 auf.

Die Kühlkanäle 5 und 24 werden von einem Kühlmedium 8, wie auch in der ersten Behandlungsstation 3 durchströmt. Beim Erwärmen auf die Anlaßtempertur des Werkstücks 1 wird somit gewährleistet, daß bestimmte Werkstückteilflächen von der Anlaßtemperatur abgeschirmt werden.

Das hier beschriebene Ausführungsbeispiel sieht sogenannte Induktorklauen zur Erwärmung des Werkstücks vor. Im Sinne dieser Erfindung liegt auch die Verwendung von Induktoren in Scheiben- oder Plattenform. Somit kann sich gege-

benenfalls die Rotation des Werkstück erübrigen.

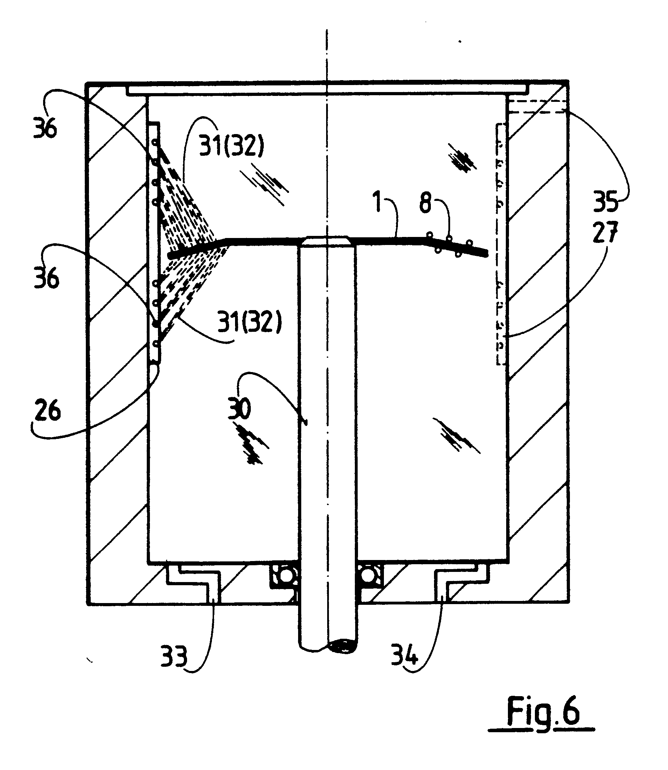

Die Figur 6 zeigt eine schematische Darstellung der Zwischenbehandlungsstation in einer Ausführungsform, in der Abschleudern des Kühlmediums, Waschen und Trocknen des Werkstücks zusammengefaßt sind.

Diese besteht aus einer Station, in der das Kühlmedium 8 vom Werkstück 1 getrennt wird und das Werkstück 1 einer Waschung und Trocknung unterzogen wird.

Hierzu weist diese Station einen Aufnahmedorn 30 zur Fixierung des Werkstücks 1 auf. Zunächst wird das Werkstück 1 mittels dem drehbaren Dorn 30 in Rotation versetzt. Aufgrund der Zentrifugalkraft wird das Kühlmedium 8 vom Werkstück abgeschleudert. Über die Abführleitung 33 wird das Kühlmedium 8 der Wiederverwendung zugeführt.

Bei einer Rotation von 1400 U/Min wird bis zu 80 % des Kühlmittels abgeschleudert. Die Abführleitung 33 ist vorzugsweise absperrbar.

Erst jetzt setzt die eigentliche Waschung des Werkstücks 1 mittels Waschmittel 31 ein. Hierzu befindet sich in der Station 3 eine Düsenanordnung 26, aus der das Waschmittel 31 austritt. Wahlweise kann diese Düsenanordnung 26 auch zum Austritt von Preßluft 32 genutzt werden.
Gegebenenfalls ist für den Preßluftaustritt eine separate Düsenanordnung 27 vorzusehen (strichliniert angeordnet).

Über die Abführleitung 34 erfolgt die Rückführung des Waschmittels 31, das gegenüber den herkömmlichen Anwendungen eine fünffach erhöhte Standzeit aufweist. Es kann also erneut zur Waschung herangezogen werden.
Gegebenenfalls kann der Abführleitung 34 eine Trenneinrichtung nachgeschaltet sein, das das Waschmittel nochmals weitgehenst vom Härtemittel trennt.

Um einen Überdruck beim Einführen der Preßluft in der Station zu vermeiden, ist hierzu eine Abführluftleitung 35 vorgesehen.

Die Düsenaustrittsöffnungen 36 sind entsprechend den Werkstückgegebenheiten in ihrer Austrittsrichtung variabel angeordnet.

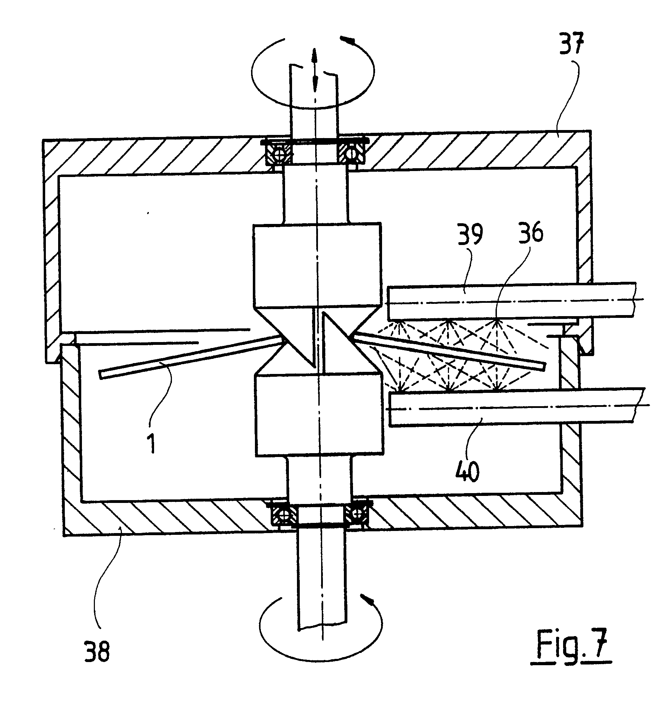

Figur 7 zeigt eine weitere Ausführungsform der Zwischenbehandlungsstation, bei der das Aufnahmegehäuse zweiteilig ausgebildet ist. Der obere Teil 37 ist in diesem Ausführungsbeispiel senkrecht verfahrbar und auf das Unterteil 38 verschließbar aufsetzbar. Nachdem das Werkstück 1 in die Zwischenbehandlungsstation eingelegt ist, fährt das Oberteil 37 an das Unterteil 38 abdichtend an, wobei im Oberteil 37 ein ausragender Arm 39 und am Unterteil 38 ein ausragender Arm 40 angeordnet sind, die die Düsenaustrittsöffnungen 36 für das Waschen bzw. für die Preßluft aufweisen.

Mit der vorliegenden Erfindung wird ein Verfahren und eine Vorrichtung geschaffen, die sich an die verschiedensten Erfordernisse anpaßt und zur Erwärmung des Werkstücks unter Rotation des Werkstücks Induktionsklauen verwendet, bei denen die Rotation des Werkstücks während der Erwärmung gewährleistet bleibt.
Insbesondere die Möglichkeit Werkstücke in nur einer Vorrichtung verschiedenen Wärmebehandlungen zuzuführen, direkt oder indirekt zu kühlen und unter gleichzeitiger Kontrolle und Erzielung einer Abschirmung bestimmter Werkstückteilflächen gegenüber der Anlaßtemperatur, ermöglicht eine verzugsarme, serienmäßige Härtung der verschiedensten Werkstücke, wobei das Kühlmittel bei beispielsweise einer Rotation von 1400 U/min bis zu 80% der Wiederverwendung zugeführt wird.

Das Waschmittel erhält hierbei eine fünffach höhere Standzeit wie bisher, wobei eine beträchtliche Minimierung des zu entsorgenden, giftigen Härtemittel/Waschmittelgemenges erzielt wird.

## Ansprüche

1. Verfahren zur verzugsarmen Wärmebehandlung von härtbaren Werkstoffen, bei mindestens teilweiser Rückführung des Kühlmediums und des Waschmittels zur Wiederverwendung,
dadurch gekennzeichnet,
daß das Werkstück (1) in nur zwei Behandlungsstationen (3, 4) allen erforderlichen Wärmebehandlungen unterworfen wird und nur bei direkter Abkühlung in der ersten Behandlungsstation (3) mindestens einer Zwischenbehandlungsstation (7) zugeführt wird, wobei in der ersten Behandlungsstation (3) das Werkstück (1) induktiv und berührungslos mittels Induktor (14) erwärmt und in der gleichen Behandlungsstation mittels Kühl- und Preßwerkzeugen (12, 13) direkt oder indirekt abgekühlt, verformt und/oder in Form gehalten wird, danach bei indirekter Abkühlung der zweiten Behandlungsstation (4) zugeführt wird und dort zum Zwecke des Anlassens induktiv und berührungslos mittels eines Induktor (15) erwärmt und in der gleichen Behandlungsstation mittels Kühl- und Preßwerkzeugen (12, 13) direkt und/oder indirekt abgekühlt wird.

2. Verfahren nach Anspruch 1,
dadurch gekennzeichnet,
daß bei direkter Abkühlung des Werkstückes in der Behandlungsstation (3) das Werkstück (1) mindestens einer Zwischenbehandlungsstation (7 und/oder 9 und/oder 10) zugeführt wird, in der das zur direkten Kühlung verwendete Kühlmedium (8) abgeschleudert, gewaschen und getrocknet wird und danach der zweiten Behandlungsstation (4) zugeführt wird.

3. Verfahren nach Anspruch 1 bis 2,
dadurch gekennzeichnet,
daß das Werkstück (1) in horizontaler Lage der Wärmebehandlung zugeführt wird.

4. Verfahren nach Anspruch 1 bis 2,
dadurch gekennzeichnet,
daß das Werkstück (1) in vertikaler Lage der Wärmebehandlungsstation zugeführt wird.

5. Verfahren nach Anspruch 1 bis 3,
dadurch gekennzeichnet,
daß das Werkstück (1) in horizontaler Lage der Wärmebehandlung zugeführt wird und unter Rotationsbewegung der Wärmebehandlung unterworfen wird.

6. Verfahren nach Anspruch 1 bis 3 und 5,
dadurch gekennzeichnet,
daß das Werkstück (1) in horizontaler Lage der Zwischenbehandlungsstation (7 und/oder 9 und/oder 10) zugeführt wird, wobei das Werkstück (1) unter Rotation der Zwischenbehandlung unterworfen wird.

7. Verfahren nach Anspruch 1 bis 3 und 5 bis 6,
dadurch gekennzeichnet,
daß das Werkstück (1) in horizontaler Lage der Wärmebehandlungsstation (4) zugeführt wird und unter Rotation der weiteren Wärmebehandlung unterworfen wird.

8. Verfahren nach Anspruch 1 bis 3 und 5 bis 7,
dadurch gekennzeichnet,
daß der Induktor (14) als Induktorklaue vorliegt und horizontal an das Werkstück (1) in der ersten Behandlungsstation (3) anfährt und dieses berührungslos unter Rotationsbewegung des Werktücks (1) induktiv erwärmt, wobei die Induktionsklaue (14) im Querschnitt U-förmig ausgebildet ist und hierbei zum Zentrum des Werkstücks (1) in Form eines Kreisausschnittes spitz ausläuft, um die Intensität der induktiven Erwärmungsenergie zum Werkstückzentrum zu vermindern.

9. Verfahren nach Anspruch 1 bis 3 und 5 bis 8,
dadurch gekennzeichnet,
daß der Induktor (15) als Induktorklaue vorliegt und in einem Winkel an das Werkstück (1) in der zweiten Behandlungsstation (4) anfährt und dieses berührungslos unter Rotationsbewegung des Werktücks (1) induktiv erwärmt, wobei die Induktionsklaue (14) im Querschnitt U-förmig ausgebildet ist und hierbei zum Zentrum des Werkstücks (1) in Form eines Kreisausschnittes spitz ausläuft, um die Intensität der induktiven Erwärmungsenergie zum Werkstückzentrum zu vermindern.

10. Verfahren nach Anspruch 1 und/oder 2,
dadurch gekennzeichnet,
daß zwischen der Behandlungsstation (4) und dem Magazin (6) eine oder mehrere Nachbehandlungsstationen (11) zwischengeschaltet sind, in denen das Werkstück (1) z. B. überdehnt wird.

11. Verfahren nach Anspruch 1 bis 10,
dadurch gekennzeichnet,
daß während der Erwärmung des Werkstückes (1) eine ringförmige Kühlung an Werkstückteilstellen erzielt wird, indem das Werkstück (1) in Kühlwerkzeugen (16, 17) während der induktiven Erwärmung gelagert ist und somit von der Anlaßtemperatur der zu behandelnden Teilstellen abgeschirmt wird.

12. Vorrichtung zur Durchführung des Verfahrens nach Anspruch 1 bis 3,
dadurch gekennzeichnet,
daß die Vorrichtung aus zwischen einem Aufnahme- und Abgabemagazin (2, 6) angeordneten ersten Behandlungsstation (3) zum Erwärmen, Abkühlen und Verformen des zu behandelnden Werkstücks (1) und einer zweiten Behandlungsstation (4) zum Anlassen und Abkühlen des zu behandelnden Werkstücks besteht, denen Zwischenbehandlungsstationen (7, 9 und 10) sowie eine Nachbehandlungsstation (11) zwischen- bzw. nachgeordnet sind.

13. Vorrichtung zur Durchführung des Verfahrens nach Anspruch 1-12,
dadurch gekennzeichnet,
daß die erste Behandlungsstation (3) eine die Rotation des Werkstücks (1) gewährleistenden, horizontal anfahrbaren Induktor (14) sowie auswechselbare, senkrecht verfahrbare Kühl- und Preßwerkzeuge (12, 13) aufweist und die zweite Behandlungsstation (4) eine die Rotation des Werkstücks (1) gewährleistende, in einem Winkel anfahrbar einen Induktor (15) sowie auswechselbare senkrecht verfahrbare Kühl- und Preßwerkzeuge (12, 13) aufweist.

14. Vorrichtung zur Durchführung des Verfahrens nach Anspruch 1-13,
dadurch gekennzeichnet,
daß zur ringförmigen Kühlung von Werkstückteilstellen drehbar gelagerte Kühlwerkzeuge (16, 17) zur Aufnahme des Werkstücks (1) vorgesehen sind.

15. Vorrichtung nach Anspruch 1 - 14,
dadurch gekennzeichnet,
daß zur Aufnahme und Abgabe der Werkstücke (1) senkrecht verfahrbare Greifwerkzeuge (18, 19) vorgesehen sind.

16. Vorrichtung nach Anspruch 1 - 15,
dadurch gekennzeichnet,
daß die Induktionsklauen (14, 15) im Querschnitt U-förmig ausgebildet sind.

17. Vorrichtung nach Anspruch 1 - 15,
dadurch gekennzeichnet,
daß der Induktor als Platte oder Ring ausgebildet ist.

18. Vorrichtung nach Anspruch 1 - 17,
dadurch gekennzeichnet,
daß die Kühl- und Preßwerkzeuge (12, 13) zur Aufnahme von Zentrierbolzen (20) koaxial zur Werkstücknabe (21) verlaufende Bohrungen (22) aufweisen, wobei der Zentrierbolzen (20) drehbar in der Vorrichtung gelagert ist.

19. Vorrichtung nach Anspruch 1 - 18,
dadurch gekennzeichnet,
daß die Kühlwerkzeuge (12, 13) senkrecht verfahrbar angeordnet sind.

20. Vorrichtung nach Anspruch 1 - 19,
dadurch gekennzeichnet,
daß die Kühlwerkzeuge (12, 13) auf der zum Werkstück (1) hinweisenden Seite die Formgebung des fertigen Werkstücks (1) aufweisen.

21. Vorrichtung nach Anspruch 1 - 20,
dadurch gekennzeichnet,
daß die Segmentkühlwerkzeuge (16, 17) mittels Lager (23) drehbar im Kühlwerkzeug (12) angeordnet sind.

22. Vorrichtung nach Anspruch 1 - 21,
dadurch gekennzeichnet,
daß die Kühl- und Preßwerkzeuge (12, 13) Kühlkanäle (24) zur indirekten Kühlung aufweisen.

23. Vorrichtung nach Anspruch 1 - 21,
dadurch gekennzeichnet,
daß die Kühlwerkzeuge (12, 13) Kühlschlitze (25) zur direkten Kühlung aufweisen.

24. Vorrichtung nach Anspruch 1 - 23,
dadurch gekennzeichnet,
daß in der Zwischenbehandlungsstation (9) Waschsprühdüsen (26) vorgesehen sind.

25. Vorrichtung nach Anspruch 1 - 24,
dadurch gekennzeichnet,
daß in der Zwischenbehandlungsstation (10) Druckluftdüsen (27) angeordnet sind.

26. Vorrichtung nach Anspruch 1 - 23,
dadurch gekennzeichnet,
daß die Zwischenbehandlungsstation (7,9, 10) in einer Behandlungsstation kombiniert sind, in der die Waschsprühdüsen (26) und die Druckluftdüsen (27) integriert sind.

27. Vorrichtung nach Anspruch 1 - 26,
dadurch gekennzeichnet,
daß die Zentrierbolzen (20) drehbar und senkrecht verfahrbar in der Vorrichtung angeordnet sind.

28. Vorrichtung nach Anspruch 1 - 27,
dadurch gekennzeichnet,
daß die Kühl- und Preßwerkzeuge (12, 13) senkrecht verfahrbar in der Vorrichtung angeordnet sind.

29. Vorrichtung nach Anspruch 26 und mindestens einem der vorhergehenden Ansprüche,
dadurch gekennzeichnet,
daß die Zwischenbehandlungsstation aus mindestens einer, das Werkstück (1) aufnehmenden Station besteht, in der das Kühlmedium (8) vom Werkstück (1) getrennt und dieses gewaschen und getrocknet wird, wobei die Zwischenbehandlungsstation einen drehbaren Dorn (30) zur Aufnahme des Werkstücks (1) sowie mindestens einer auf das Werkstück (1) gerichteten Düsenanordnung (26,27), aus der Waschmittel (31) und/oder Preßluft (32) austritt, sowie Ab-, Rückführleitungen (33,34) für das vom Werkstück (1) abgeschleuderte Kühlmedium (8) bzw. Waschmittel (31) vorsieht.

30. Vorrichtung nach Anspruch 29 und mindestens einem der vorhergehenden Ansprüche,
dadurch gekennzeichnet,
daß in der Zwischenbehandlungsstation mindestens eine absperrbare Abführleitung (33) für das abgeschleuderte Kühlmedium (8) vorgesehen ist.

31. Vorrichtung nach Anspruch 29 und 30 und mindestens einem der vorhergehenden Ansprüche,
dadurch gekennzeichnet,
daß in der Zwischenbehandlungsstation mindestens eine Rückführleitung (34) für das Waschmittel (31) vorgesehen ist.

32. Vorrichtung nach Anspruch 29 - 31 und mindestens einem der vorhergehenden Ansprüche,
dadurch gekennzeichnet,
daß in der Zwischenbehandlungsstation bei luft- und gasdichtem Abschluß eine Abführleitung (35) für die eingeführte Preßluft (32) vorgesehen ist.

33. Vorrichtung nach Anspruch 29 - 32 und mindestens einem der vorhergehenden Ansprüche,
dadurch gekennzeichnet,
daß die Düsenanordnung (26,27) eine Vielzahl von Austrittsöffnungen (36) aufweist, die beidseitig auf das Werkstück (1) gerichtet sind.

34. Vorrichtung nach Anspruch 33 und mindestens einem der vorhergehenden Ansprüche,
dadurch gekennzeichnet,
daß die Austrittsöffnungen (36) in einem zur Werkstückshorizontalen von 90° abweichenden Winkel auf das Werkstück (1) gerichtet sind.

Fig. 1

Fig. 2

Fig. 3

3

24  8  13

21  14  29

1

12  22

28

24  8  20

Fig.4

25

Fig.4a

12

EP 0 385 284 A1

Fig.5

36

31(32)

35
27

1    8

36

31(32)

26

30

33    34

<u>Fig.6</u>

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 605 820 (JENNY PRESSEN)<br>--- | | C 21 D 1/673<br>C 21 D 9/00<br>C 21 D 1/42 |
| A | DE-C- 919 892 (E. BELLMANN)<br>--- | | |
| A | FR-A-2 593 192 (STEIN HEURTEY)<br>--- | | |
| A | FR-A-2 125 831 (FIRMA PAUL FERD. PEDDINGHAUS)<br>--- | | |
| A | METAL SCIENCE & HEAT TREATMENT, Band 18, Nrs. 9-10, September-Oktober 1976, Seiten 769-773; V.I. DUBEIKOVSKII et al.: "Automated heat treatment line for friction disks of the Kirovets K-701 tractor"<br>--- | | |
| P,X | DE-U-8 902 418 (KARL HEESS)<br>* Das ganze Dokument *<br>----- | 1-34 | |

**RECHERCHIERTE SACHGEBIETE (Int. Cl.5)**

C 21 D.

Der vorliegende Recherchenbericht wurde für alle Patentansprüche erstellt

| Recherchenort | Abschlußdatum der Recherche | Prüfer |
|---|---|---|
| DEN HAAG | 11-06-1990 | MOLLET G.H.J. |